# FASCICULE DE BREVET EUROPEEN

(11) **EP 1 433 322 B1**
(45) Date de publication et mention de la délivrance du brevet: **16.03.2005**
(21) Numéro de dépôt: 02745472.7
(22) Date de dépôt: 31.05.2002
(51) Int. Cl.: H04N 7/173, G06F 17/60

(54) **PROCEDE DE TRANSMISSION D'EMISSIONS AUDIOVISUELLES PROPOSEES PAR DES UTILISATEURS, TERMINAL ET SERVEUR POUR LA MISE EN OEUVRE DU PROCEDE**
VERFAHREN ZUM SENDEN VON DURCH BENUTZER VORGESCHLAGENEN AUDIOVISUELLEN PROGRAMMEN, ENDGERÄT UND SERVER DAFÜR
METHOD FOR TRANSMITTING AUDIO-VISUAL PROGRAMMES PROPOSED BY USERS, TERMINAL AND SERVER THEREFOR

(30) Priorité: 31.07.2001 FR 0110264
(43) Date de publication de la demande: 30.06.2004
(73) Titulaire: Thomson Licensing S.A., 92100 Boulogne-Billancourt (FR)
(72) Inventeur: CHEVALLIER, Louis, F-35520 La Mezière (FR); COSMAO, Michel, F-35340 Liffre (FR); VIGOUROUX, Jean-Ronan, F-35000 Rennes (FR)
(74) Mandataire: Kerber, Thierry
(86) Numéro de dépôt international: PCT/FR2002/001826
(87) Numéro de publication internationale: WO 2003/013139

(56) Documents cités:
- EP-A- 0 912 061
- WO-A-01/01317
- WO-A-99/60790
- US-A- 6 020 912

## Description

L'invention concerne un procédé de transmission d'émissions audiovisuelles dans au moins un terminal relié à un réseau, ainsi qu'un terminal mettant en oeuvre le procédé, et un serveur pour la transmission des émissions aux terminaux. L'invention s'applique plus particulièrement lorsque la réception d'émissions audiovisuelles est conditionnée par un paiement.

Le contexte de la présente invention est celui des serveurs audiovisuels capables de fournir à la demande des émissions audiovisuelles, et de tout appareil domestique capable de visualiser des émissions audiovisuelles reçues d'un réseau terrestre, hertzien ou satellitaire et dialoguant avec un serveur à l'aide d'un réseau de diffusion. L'émission audiovisuelle est typiquement transmise sur un réseau de diffusion monodirectionel. L'accès aux émissions audiovisuelles est généralement conditionné par un paiement de la part de l'utilisateur de l'appareil. Des Guides Electroniques de Programme (EPG en abrégé) proposent aux utilisateurs un catalogue d'émissions audiovisuelles, et notamment des films. L'utilisateur choisit dans ce catalogue une émission et après paiement du droit d'accès, il reçoit les moyens permettant de la visualiser en clair. L'émission est diffusée cryptée sur le réseau de diffusion, et le récepteur décrypte l'émission grâce à un code préalablement reçu. Une autre façon de faire consiste à établir une communication avec le serveur fournisseur d'émissions, à interroger son catalogue, et à télécharger l'émission à la suite d'un paiement. Le prix, qui est fixé par le fournisseur d'émissions, est généralement affiché par l'EPG, l'utilisateur connaît donc le coût de l'opération avant de s'engager.

Certains appareils sont dotés d'un disque dur ou de tout autre moyen de stockage d'émissions (cassette, cartouche, DVD-RAM,...). Le téléchargement d'une émission à travers le réseau peut alors s'effectuer directement vers le disque dur, sous forme compressée, indépendamment des contraintes de visualisation. L'émission peut être alors téléchargée à n'importe quel moment, sans que l'utilisateur intervienne, et à un moment qui ne le dérange pas, la nuit par exemple. L'émission est mémorisée au fur et à mesure de la réception. Lors de la visualisation, l'appareil lit l'émission du moyen de stockage, la décompresse et envoie les signaux audiovisuels vers un écran.

Il s'avère que la rentabilité d'un téléchargement fluctue considérablement selon les circonstances. Un des buts de la présente invention est de pouvoir optimiser la rentabilité de tels téléchargements.

A cet effet, l'invention concerne un procédé de transmission d'émissions audiovisuelles émises à partir d'un serveur à destination d'au moins un terminal comportant une première étape de visualisation d'un catalogue d'émissions audiovisuelles téléchargeables au niveau du terminal, caractérisé en ce qu'il comporte les étapes chronologiques suivantes :
au niveau du terminal :
   - une étape de sélection d'au moins une émission audiovisuelle ;
   - une étape d'élaboration d'une proposition conditionnant la réception de l'émission sélectionnée ;
   - une étape de transmission de la proposition vers le serveur, proposition comprenant au moins un des paramètres suivants : délai, prix ;
et au niveau du serveur :
   - une étape d'analyse des propositions émises par les terminaux, et de détermination d'une décision de transmettre l'émission compte tenu des paramètres ;
si la décision de transmettre l'émission est prise :
   - une étape de transmission de l'émission sélectionnée sur un réseau de diffusion
   - une étape d'émission d'un code permettant à chaque terminal ayant transmis une proposition de visualiser l'émission reçue, la visualisation intervenant après paiement d'un prix minimum et/ou au plus tard à la fin du délai déterminé.

De cette façon, la présente solution évite au serveur de proposer à un prix modique une émission qui, téléchargée à une population restreinte d'utilisateurs, ne sera pas rentable pour le serveur. Au contraire de l'art antérieur qui divulgue un prix d'émission fixe, le prix peut dans l'invention être fixé par les utilisateurs en fonction de leurs intérêts, et validé par le serveur en fonction de la rentabilité.

Selon un perfectionnement, l'étape d'analyse est activée après un temps déterminé à partir du moment où l'émission est mise dans le catalogue. Selon une variante, l'étape d'analyse est activée après qu'un nombre déterminé de propositions a été reçu.

Selon un perfectionnement, le serveur envoie vers les terminaux une notification indiquant à l'issue de l'étape d'analyse qu'il a décidé de ne pas diffuser l'émission. Cette notification peut comporter une indication de la raison du refus pour le serveur de ne pas diffuser l'émission. Cette notification peut aussi comporter une valeur de paramètre qui, incorporée dans une proposition, permettrait à l'utilisateur de visualiser l'émission.

Selon un autre perfectionnement, la proposition émise par un terminal comporte une indication déterminant un sous-ensemble d'émissions du catalogue, par exemple un thème précis. Le serveur sélectionne alors dans le sous-ensemble une émission dont la diffusion respecte les critères propres au serveur. Selon un autre perfectionnement, la décision de diffuser une émission est prise de préférence lorsque de nombreux utilisateurs ont proposé cette émission. De cette façon, la présente invention permet au serveur de ne télécharger des émissions qu'à un nombre d'utilisateurs connu à l'avance, et de différer le téléchargement ou de supprimer du catalogue cette émission si ce nombre est trop faible.

Selon un dernier perfectionnement, le procédé comporte une étape d'enregistrement de l'émission que l'on veut recevoir sous certaines conditions au niveau des terminaux.

La présente invention concerne également un terminal audiovisuel comprenant une unité centrale, un moyen de réception d'émissions audiovisuelles provenant d'un réseau de diffusion, un moyen de communication bidirectionnel avec un second réseau, un moyen d'affichage d'un catalogue d'émissions disponibles et un moyen de sélection d'une émission audiovisuelle, caractérisé en ce qu'il comprend en outre un moyen d'élaboration d'au moins un paramètre tel que prix et/ou délai, associé au téléchargement d'au moins une émission sélectionnée, un premier moyen pour émettre vers le second réseau une proposition comportant au moins un identifiant d'émission et le paramètre introduit, et un moyen pour recevoir une décision concernant la proposition pour télécharger l'émission du réseau de diffusion selon le paramètre précédemment élaboré.

La présente invention concerne également un serveur comportant une base de données contenant des émissions audiovisuelles, le serveur étant doté d'une interface de communication pour établir une liaison avec une pluralité de terminaux, caractérisé en ce qu'il comporte un moyen de réception de propositions pour transmettre au moins une émission contenue dans la base, les dites propositions provenant d'au moins un terminal comprenant au moins un paramètre tel qu'un prix ou un délai relatif à la transmission de l'émission du serveur vers le terminal, un moyen d'analyse des propositions reçues, un moyen de détermination d'une décision de transmettre l'émission compte tenu des paramètres transmis sur un réseau de diffusion; et un moyen d'émission vers le terminal d'un code permettant de visualiser au moins une émission sélectionnée.

La présente invention apparaîtra maintenant avec plus de détails dans le cadre de la description qui suit d'exemples de réalisation donnés à titre illustratif en se référant aux figures annexées parmi lesquelles :
- la figure 1 est un diagramme bloc d'un récepteur audiovisuel pour la mise en oeuvre de l'invention,
- la figure 2 est un schéma montrant les différents éléments d'un serveur selon l'invention,
- la figure 3 illustre les différents dialogues entre un utilisateur et le serveur,
- les figures 4.a, 4.b, 4.c, et 4.d représentent des apparences d'écran pour la mise en oeuvre de l'invention.

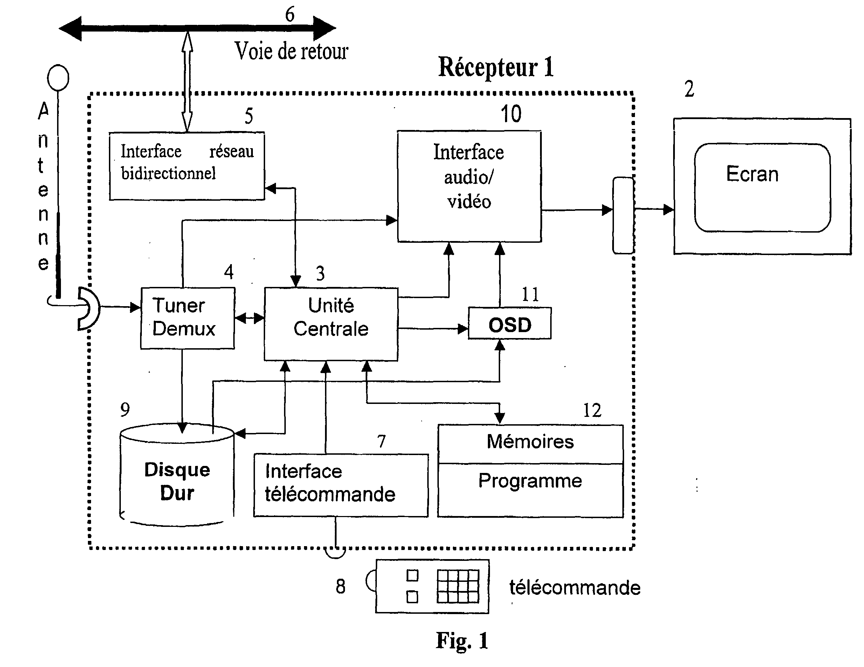

On décrira tout d'abord à l'aide de la figure 1, le fonctionnement d'un récepteur audiovisuel 1 muni d'un dispositif d'affichage 2. Le récepteur comprend une unité centrale 3 reliée à une mémoire 12 de programme (ROM) et de travail (RAM), et une interface 5 pour une communication bidirectionnelle avec un réseau 6. Cette interface est également appelée voie de retour. Ce réseau est par exemple un réseau IEEE 1394. Le récepteur peut également recevoir des données audio/vidéo d'un réseau de diffusion à travers une antenne de réception associée à un démodulateur 4. L'antenne peut également être remplacée par une connexion physique à tout type de bus numérique local à haut débit permettant de transmettre des données audio/vidéo en temps réel, tel qu'un point d'accès câble ou une connexion DSL. Le récepteur comprend en outre un récepteur de signaux infrarouge 7 pour recevoir les signaux d'une télécommande 8, un moyen de mémorisation 9 pour le stockage d'émission audiovisuelle, et une logique de décodage audio/vidéo 10 pour la génération des signaux audiovisuels envoyés à l'écran de télévision 2. La nature des émissions audiovisuelles étant numérique, le moyen de mémorisation 9 est de préférence un disque dur (HDD), il peut aussi être un lecteur/enregistreur de disque optique enregistrable (DVD-RAM).

La télécommande 8 est dotée des touches de direction ↑, ↓, → et ← et des touches: « OK », « Achat » et « Envoi» dont nous verrons l'emploi plus loin dans la description. Le récepteur dispose également d'une horloge (non représentée) permettant de réveiller le récepteur lorsqu'une émission à enregistrer est sur le point d'être téléchargée.

Le récepteur comprend également un circuit 11 d'affichage de données sur l'écran, appelé souvent circuit OSD, de l'anglais "On Screen Display" (signifiant littéralement "affichage sur l'écran"). Le circuit OSD 11 est un générateur de texte et de graphisme qui permet d'afficher à l'écran des menus, des pictogrammes (par exemple, un numéro correspondant à la chaîne visualisée), ou qui permet de mélanger deux contenus audiovisuels. Le circuit OSD est contrôlé par l'Unité Centrale 3 et un programme appelé « Chargeur » qui est résident dans la mémoire 12. Le Chargeur est typiquement constitué d'un module de programme inscrit en mémoire morte et de paramètres enregistrés en mémoire de travail. Le Chargeur peut aussi être réalisé sous la forme d'un circuit spécialisé de type ASIC par exemple. Ce circuit peut être doté de fonctions sécuritaires permettant de réaliser un paiement suite à la décision d'un utilisateur de visualiser une émission payante.

Le récepteur reçoit des données d'identification d'émissions audiovisuelles de la voie de retour 6 ou du réseau de diffusion. Ces données comprennent des éléments visualisables, le titre par exemple ou une image de la bande annonce. A l'aide d'un EPG et des touches de sa télécommande, l'utilisateur sélectionne une ou plusieurs émissions en vue de les recevoir et de les enregistrer dans le disque dur 9.

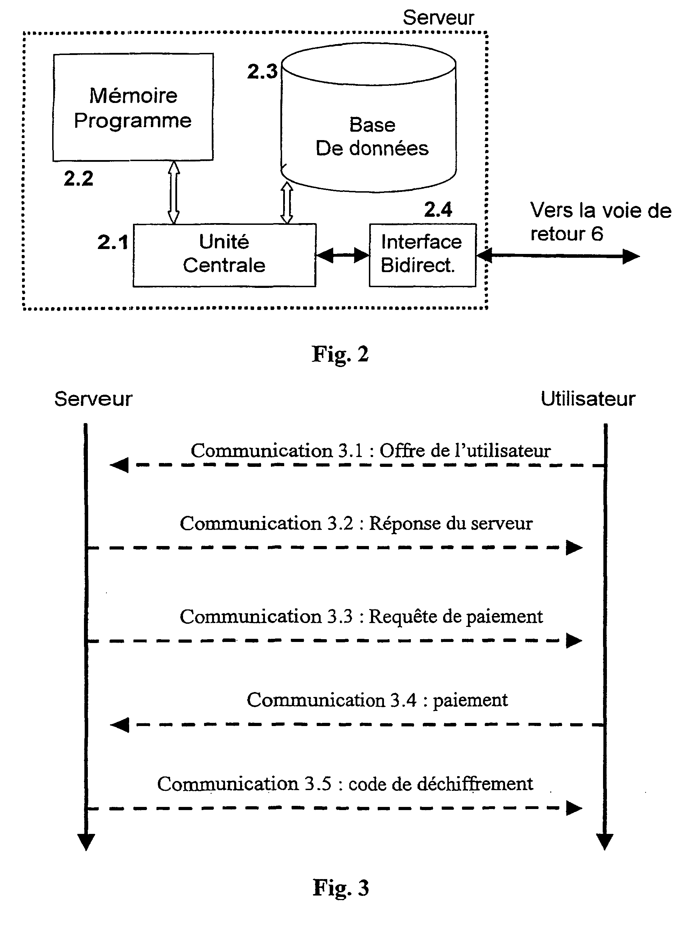

Le serveur décrit à la figure 2 comprend une unité centrale 2.1, une mémoire de programme 2.2, une mémoire contenant une base de donnée 2.3 réalisée préférentiellement par un disque dur et une interface de communication réalisant une liaison bidirectionnelle 2.4 à travers le réseau bidirectionnel 6 avec les récepteurs décrits précédemment. La base de donnée 2.3 contient notamment le catalogue des émissions disponibles. Le serveur est également en relation avec le gestionnaire du réseau de diffusion grâce à une interface (non représentée). Il communique notamment à ce gestionnaire des ordres de diffusion d'émissions à des heures et dates déterminées.

Après avoir décrit les différents éléments de l'invention, nous allons maintenant expliquer comment ceux-ci coopèrent.

Les différents dialogues entre l'utilisateur et le serveur sont illustrés par la figure 3. L'utilisateur lance tout d'abord le programme Chargeur qui dans un premier temps, télécharge du réseau de diffusion le catalogue des émissions disponibles. Une variante consiste à se connecter au serveur à travers le réseau 6, et à télécharger le catalogue. Le catalogue géré par le serveur contient une liste d'émissions proposées aux utilisateurs, ces émissions sont identifiées par un titre ou une image de sa bande annonce.

Le catalogue est ensuite affiché sur l'écran 2 pour que l'utilisateur puisse sélectionner au moins une émission. Compte tenu de ses disponibilités et de son budget, l'utilisateur détermine des paramètres dans le but final de visualiser cette émission sur son récepteur : un prix et une date butée de mise à sa disposition. Ensuite, au cours d'une première communication (communication 3.1), l'utilisateur envoie au serveur le triplet formé des éléments suivants :
- identifiant de l'émission repérée dans l'EPG,
- date butée pour recevoir l'émission,
- prix proposé.

Le serveur enregistre toutes les propositions et à la suite d'une étape d'analyse détermine des paramètres serveurs au delà desquels la diffusion devient rentable pour le serveur. Ces paramètres sont calculés en fonction de la durée de diffusion de l'émission, qui de ce fait occupe le réseau pendant un temps déterminé, et en fonction de l'heure de diffusion. Par exemple, la diffusion la nuit coûte moins cher que le jour. A l'issue de l'étape d'analyse des propositions pour une émission donnée, le serveur compare les paramètres de chaque proposition avec ceux précédemment calculés. Si le prix proposé par l'utilisateur est supérieur ou égal à celui déterminé par le serveur ET si la date butée proposée par l'utilisateur est postérieure ou égale à celle prévue par le serveur, ALORS le serveur accepte la proposition provenant de cet utilisateur et lui notifie son accord dans une communication (communication 3.2). Le serveur envoie également à l'utilisateur une demande de paiement (communication 3.3). Il est important de noter que le serveur ne transmet pas ses paramètres, de cette manière les utilisateurs ne peuvent pas les connaître, et sont obligés de proposer une somme importante pour être sûrs que le serveur a un intérêt pour commander la diffusion de cette émission, ce qui permettra à l'utilisateur de la recevoir.

L'utilisateur reçoit l'avis que sa proposition est acceptée et que le serveur lui demande de payer l'émission. Il réalise alors le paiement selon des techniques connues, en utilisant par exemple des jetons prépayés ou une carte à puce de type bancaire introduite dans son récepteur. Les paramètres du paiement sont envoyés au serveur (communication 3.4). Celui-ci contrôle que les paramètres du paiement sont authentiques, et dans l'affirmative, envoie au récepteur un code particulier (communication 3.5) qui va lui permettre de déchiffrer l'émission lorsqu'elle sera reçue. Dans une variante possible l'utilisateur ne réalise pas directement le paiement mais s'engage à payer l'émission reçue sur une facture qui lui sera présentée ultérieurement. Cette facture peut regrouper les différentes utilisations du service par l'utilisateur au cours d'une période donnée, voire d'autres services, tels qu'un abonnement à un fournisseur d'accès câble ou à un opérateur de télévision satellite.

La mise à disposition de l'émission à l'utilisateur peut se faire de différentes façons. Une première façon consiste à enregistrer l'émission sous forme chiffrée dans chaque récepteur qui a émis une proposition. Puis, si la proposition est acceptée et si le paiement est effectué, un code permettant de déchiffrer est transmis au récepteur. De cette façon, le paiement peut s'effectuer indépendamment de la réception. Une variante consiste à transmettre d'abord au récepteur l'acceptation de la proposition et si le paiement est effectué, le code de déchiffrement. Ensuite, l'émission est émise de façon chiffrée, déchiffrée à la réception et enregistrée en clair dans la mémoire du récepteur. Cette autre méthode présente l'avantage d'éviter de déchiffrer chaque fois que l'on visualise l'émission enregistrée.

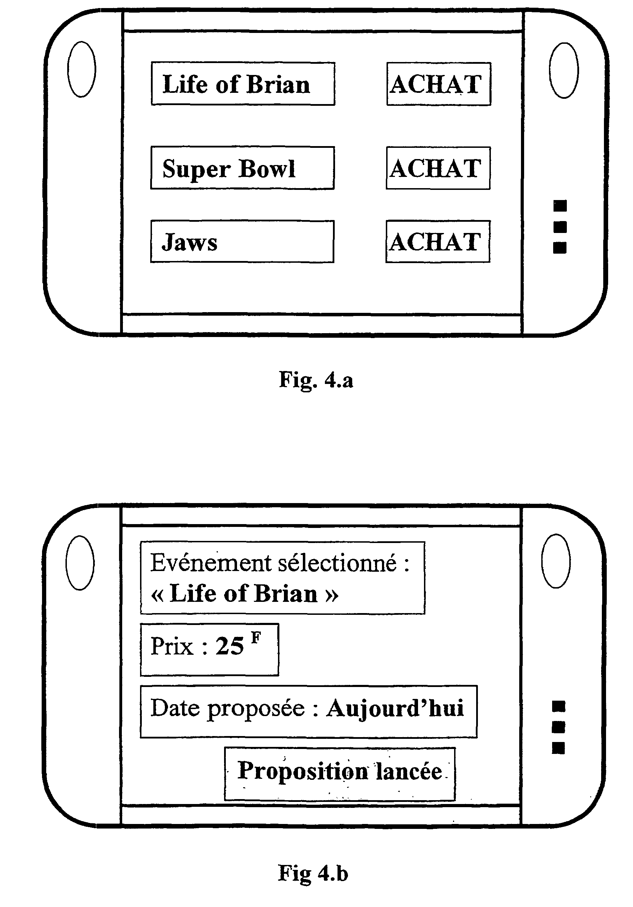

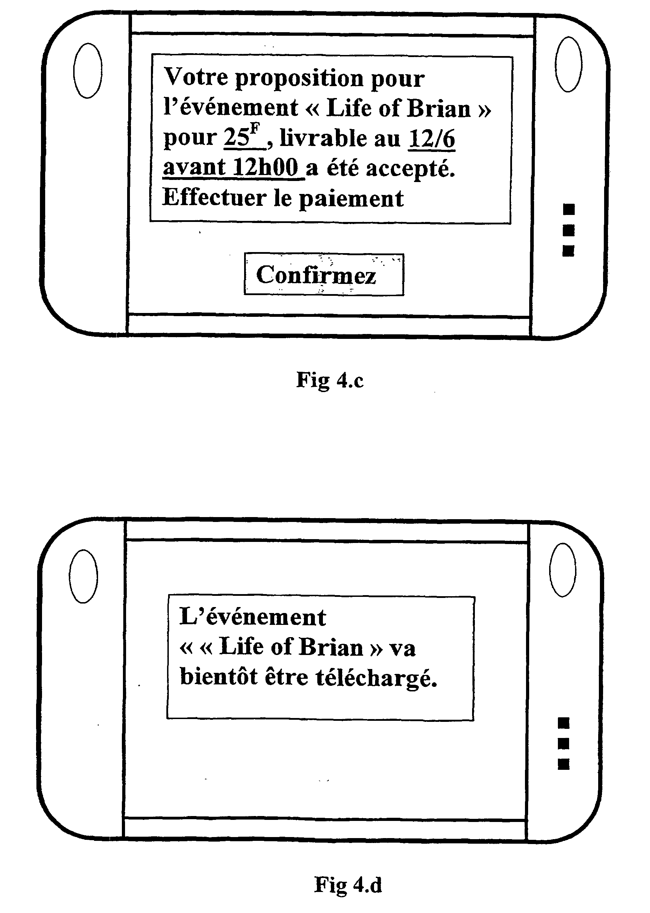

Le Chargeur affiche des menus permettant à l'utilisateur d'introduire ses paramètres et de lancer les communications entre le serveur et le récepteur. Le premier menu illustré par la figure 4.a permet de présenter le catalogue des émissions proposées par le serveur. Dans l'exemple, trois émissions sont disponibles : « Life of Brian », « Super Bowl » et « Jaws ». Des icônes marquées « ACHAT » sont placées à coté des titres. L'utilisateur sélectionne l'icône correspondant à l'émission qu'il veut recevoir. Une variante consiste à utiliser une touche spéciale « Achat » de la télécommande 8. Le menu illustré à la figure 4.b apparaît. Ce menu permet à l'utilisateur d'introduire les paramètres de sa proposition. Dans une fenêtre, l'utilisateur introduit le prix qu'il veut payer sur les touches du pavé numérique de sa télécommande 8, dans l'exemple : 25F. Dans une autre fenêtre, l'utilisateur introduit l'heure et la date limite pour recevoir cette émission : « 12h00 » au prix qu'il s'est fixé. Puis, l'utilisateur valide sa proposition en appuyant sur la touche « Envoi », la proposition constituée d'un identifiant de l'émission sélectionnée et des paramètres introduits par l'utilisateur est alors envoyée au serveur.

Le serveur reçoit la proposition par le réseau 6 et l'enregistre dans sa base de données 2.3 avec les autres propositions relatives à la même émission. Au bout d'un certain temps à compter de l'introduction de l'émission dans le catalogue (six heures par exemple), le serveur déclenche l'étape d'analyse des propositions reçues. Il détermine d'abord l'ensemble des propositions qui ne sont pas caduques, c'est à dire qui concernent des émissions pouvant encore être diffusées dans le délai proposé par les utilisateurs. Le serveur calcule ensuite le prix cumulé des propositions de cet ensemble, et les délais de diffusion imposés par les utilisateurs. En fonction d'une stratégie qui est décrite plus loin, le serveur décide ou non de programmer la diffusion de l'émission. Si le serveur annule la diffusion du fait qu'elle n'est pas rentable, il notifie dans une communication son refus, en indiquant l'identifiant de l'émission. Cette notification peut être effectuée soit à travers le réseau de diffusion, soit par la voie de retour. Si la notification est effectuée par le réseau de diffusion, chaque récepteur vérifie s'il a envoyé préalablement une proposition pour cette émission, et dans l'affirmative informe l'utilisateur par un message sur l'écran 2 qu'il ne recevra pas l'émission correspondant à sa proposition.

Si le serveur programme la diffusion de l'émission en considérant qu'elle est rentable, alors il relance la communication avec chaque utilisateur. Pour cela, il envoie un message à tous les récepteurs qui ont émis une proposition, indiquant l'accord, l'identifiant de l'émission, les paramètres proposés par chaque utilisateur, et la date de mise à disposition de cette émission. Le récepteur affiche alors le menu illustré à la figure 4.c en indiquant le moment de téléchargement de l'émission. Le serveur demande ensuite le paiement. L'utilisateur valide en appuyant sur la touche « OK » ce qui a pour effet de lancer la transaction pour la somme de 25F selon l'exemple précédent. Le serveur reçoit le certificat du paiement et renvoie à l'utilisateur l'accusé réception qui s'affiche sous la forme du menu illustré à la figure 4.d. La phrase « l'émission « Life of Brian » va être livrée» est affichée. L'acceptation de la proposition à destination de l'utilisateur est émise au plus tard immédiatement avant le téléchargement de l'émission.

L'étape d'analyse des propositions est déclenchée de façon simple un temps déterminé à partir du moment où l'émission est proposée au catalogue. Une variante consiste à comptabiliser les propositions pour une émission donnée et à lancer l'étape d'analyse lorsqu'un certain nombre de propositions a été reçu. Si à l'issue d'un délai maximum fixé au départ par le serveur, le nombre minimum de propositions n'est pas atteint, alors le serveur ne commande pas sa diffusion.

Bien sûr, si d'autres propositions arrivent après l'étape d'analyse, et avant la diffusion, et si elles sont compatibles avec les paramètres de prix et de délais calculés par le serveur, alors elles sont acceptées et l'émission est téléchargée aux utilisateurs qui l'ont demandée.

Un perfectionnement de l'invention consiste en ce que le serveur indique au moins une raison du refus des propositions. Par exemple, une proposition d'une émission d'une durée très longue en demandant un délai court, ne peut être acceptée pour des raisons matérielles d'occupation de bande passante du réseau de diffusion. Quel que soit le prix proposé, la proposition ne peut être satisfaite. Le serveur n'attend pas la fin de l'étape d'analyse des propositions, et répond tout de suite par la négative à l'utilisateur en indiquant la raison du refus. Ce perfectionnement permet à l'utilisateur de reformuler sa proposition en tenant compte de la raison du refus, en l'occurrence en indiquant un autre délai, et de l'envoyer au serveur. Cette nouvelle proposition a plus de chance d'être acceptée.

Un perfectionnement consiste en ce que l'utilisateur ne définit pas précisément l'émission qu'il veut recevoir mais un ou plusieurs des critères transmis dans des tables de signalisation (par exemple une table décrite dans le standard DVB-SI). Ces tables contiennent des attributs caractéristiques des émissions audiovisuelles. Les critères définissent des sous-ensembles d'émissions possédant un critère en commun. Par exemple, l'utilisateur peut définir un ou plusieurs thèmes et/ou sous-thèmes d'émissions, tel que : Nature : film et thème : science-fiction, ou encore « documentaire » et « animalier ». L'utilisateur peut aussi utiliser le nom d'un acteur, ou celui d'un producteur. Par exemple, il peut demander au serveur un «western» avec « John Wayne ». Le serveur en retour choisit une émission qui correspond aux critères ou pour laquelle l'étape d'analyse a abouti à une acceptation de diffusion, puis il la propose à l'utilisateur.

Nous allons maintenant expliquer comment le serveur détermine les émissions à télécharger, et dans quel ordre.

Supposons que le serveur propose m émissions Ei (i = 1 à m) dans son catalogue. Nous avons dit précédemment que le serveur enregistre toutes les propositions des utilisateurs dans sa base de données 2.3. A un certain moment, il analyse l'ensemble des propositions et calcule des paramètres au-delà desquels la diffusion de l'émission est rentable. Pour une émission "Ei" donnée, la somme que lui rapporterait les propositions si elles étaient satisfaites, varie en fonction du délai pour transmettre cette émission. Ceci pour deux raisons, d'une part plus le serveur attend, moins il satisfait d'utilisateurs. D'autre part, les utilisateurs qui veulent rapidement recevoir l'émission sont susceptibles de faire une meilleure offre, alors que ceux qui ne sont pas pressés de le recevoir, proposent un prix moindre. La présente invention permet au serveur de programmer la diffusion d'une émission en fonction du prix que cette diffusion va lui rapporter.

Le serveur met constamment à jour un tableau indiquant pour chaque émission et pour les huit prochaines tranches horaires, le nombre d'utilisateurs et la somme que les utilisateurs proposent pour recevoir l'émission. Dès qu'une émission est diffusée, elle disparaît du tableau. Mais elle peut réapparaître si elle n'est pas supprimée du catalogue car des utilisateurs peuvent continuer à la demander. En effet, certaines émissions sont très appréciées et peuvent être diffusées un nombre déterminé de fois, il ne faut donc pas les supprimer du catalogue après la première diffusion. Pour simplifier, le tableau ci-dessous ne contient que quatre émissions.

| Emission : | Durée de transmission | 1 ° heure | 2° heure | 3° heure | 4° heure | 5° heure | 6° heure | 7° heure | 8° heure |
|---|---|---|---|---|---|---|---|---|---|
| E1 | 58 mn | 23 / 412^{F} | 65 / 925^{F} | 89 / 1230^{F} | 85 / 1050^{F} | 45 / 602^{F} | 23 / 245^{F} | 9 / 98^{F} | 5 / 65^{F} |
| E2 | 131 mn | 51 / 982^{F} | 95 / 1756^{F} | 88 / 1622^{F} | 81 / 1460^{F} | 61 / 801^{F} | 52 / 560^{F} | 40 / 456^{F} | 26 / 287^{F} |
| E5 | 28 mn | 23 / 321^{F} | 24 / 322 ^{F} | 26 / 331^{F} | 29 / 148^{F} | 25 / 305^{F} | 12 / 185^{F} | 12 / 160^{F} | 5 / 64^{F} |
| E9 | 90 mn | 45 / 765^{F} | 32 / 612^{F} | 25 / 498^{F} | 19 / 358^{F} | 18 / 321^{F} | 15 / 301^{F} | 12 / 205^{F} | 16 / 198^{F} |

(les chiffres sont donnés à titre d'exemple, les prix sont les cumuls des propositions)

Une première stratégie consiste en ce que le serveur prennent en compte les propositions immédiates, c'est à dire dans l'heure. L'étape d'analyse des propositions est dans ce cas réduite à une heure. Cette stratégie se justifie car elle permet de satisfaire tous les utilisateurs qui ont demandé une émission quel que soit le délai proposé. A l'issue d'une tranche horaire, le serveur efface du tableau les données relatives aux émissions diffusées (sauf s'il a été convenu de la diffuser plusieurs fois), et analyse la tranche horaire suivante. Le serveur détermine alors les émissions à télécharger au cours de cette tranche horaire. Le tableau est continuellement mis à jour en fonction des propositions, si une proposition arrive mais ne concerne pas une émission répertoriée dans le catalogue, le serveur envoie une notification de refus à l'utilisateur. En effet, dès qu'une émission est au catalogue, elle est automatiquement répertoriée dans le tableau.

Pour chaque émission, le serveur additionne les sommes correspondant à chaque tranche horaire, et choisit les émissions qui rapportent le plus. Selon les valeurs numériques données dans le tableau ci-dessus, on s'aperçoit que le téléchargement des émissions rapporterait :
- Pour l'émission E1 : 4627 F
- Pour l'émission E2 : 7924 F
- Pour l'émission E5 : 2036 F
- Pour l'émission E9 : 3258F

Selon la première stratégie, le serveur diffuse en priorité les émissions qui lui rapportent le plus : d'abord E2, ensuite E1, puis E9 et E5.

Cette première stratégie est bien adaptée lorsque le serveur reçoit peu de propositions et si le catalogue contient un nombre restreint d'émissions. Mais, si de nombreux choix sont offerts aux utilisateurs, le serveur va probablement recevoir des propositions pour chaque émission. Il devra donc faire une sélection. A la fin de chaque tranche horaire, il détermine les émissions dont le téléchargement est le plus rentable. Pour déterminer la rentabilité du téléchargement d'une émission, le serveur peut tenir compte de la durée de sa transmission. Pour cela, il calcule pour chaque émission le revenu par unité de temps (une minute par exemple) de sa transmission :
- Pour l'émission E1 : 4627 F / 58 = 80 F/mn
- Pour l'émission E2 : 7924 F / 131 = 60 F/mn
- Pour l'émission E5 : 2036 F / 28 = 73 F/mn
- Pour l'émission E9 : 3258F / 90 = 36 F/mn

Supposons par exemple que la bande passante du réseau de diffusion permet de ne télécharger que trois heures environ d'émissions audiovisuelles par tranches horaires. Il importe donc d'optimiser cette tranche et de télécharger d'abord les émissions les plus rentables. Dans le cas présent, Les émissions E1 et E5 sont les plus rentables et passeront avant l'émission E2. Il reste alors 180 - (58+28) = 94 minutes de diffusion ce qui est insuffisant pour diffuser l'émission E2. Compte tenu de sa durée, la diffusion de E2 va se dérouler sur deux tranches horaires. Donc les propositions pour recevoir E2 dans les deux heures au moins seront satisfaites, mais pas celles pour recevoir dans l'heure. La diffusion de E2 ne contentera donc pas toutes les propositions. Les 131 - 94 = 37 minutes restantes pour diffuser E1 seront prises dans la prochaine fenêtre horaire. Aux utilisateurs dont le délai proposé n'est pas respecté, le serveur envoie un message indiquant l'heure prévue de téléchargement et un prix inférieur à celui proposé initialement. Ces utilisateurs sont alors libres d'accepter ou de refuser la nouvelle offre que leur fait le serveur.

Une autre stratégie (qui peut aussi permettre de choisir entre deux choix équivalents en terme de rentabilité) consiste à choisir les émissions permettant de contenter le maximum d'utilisateurs, Le serveur choisira alors l'émission E9 qui peut être diffusée dans le laps de temps restant de 94 minutes, plutôt que l'émission E1. Ainsi, le serveur peut satisfaire tous les utilisateurs qui ont demandé E1, E5 et E9.

Il faut bien noter que l'utilisateur n'est pas sûr lorsqu'il fait une proposition de téléchargement, d'obtenir ce qu'il veut. A l'issue de l'étape d'analyse, le serveur détermine les groupes de propositions les plus intéressants et choisit les plus avantageuses. Certaines propositions seront alors refusées.

Un perfectionnement consiste en ce que les téléchargements s'effectuent sur plusieurs canaux. Certains canaux ayant des débits plus rapides, seront utilisés pour des téléchargements à délai court. D'autres canaux sont utilisés pour des émissions d'un rapport financier faible. Le moyen de communication peut être différent, le serveur peut utiliser des canaux hertziens ou satellitaires.

Un autre perfectionnement consiste en ce que le serveur prend en compte l'évolution des délais proposés par les utilisateurs. En effet, en analysant l'évolution des propositions en fonction du délai proposé : 1 heure, 2 heures, 3 heures, ... on s'aperçoit qu'en règle générale, le nombre de proposition croît puis, décroît après un certain délai dit « extremum ». Si le serveur retarde d'une ou plusieurs tranches horaires la diffusion d'une émission, le nombre de propositions insatisfaites reste faible comparativement au nombre total de propositions. Si l'extremum se trouve dans la première tranche, le retard de diffusion pour cette émission entraîne la non-satisfaction d'un nombre important de propositions. La détermination de la position de l'extremum dans les tranches. horaires est donc un facteur important pour définir les prochains téléchargements.

Par exemple, en analysant les valeurs numériques du tableau ci-dessus, on s'aperçoit que les maxima des propositions interviennent dans les tranches horaires suivantes :
- Pour l'émission E1 : 3 heures
- Pour l'émission E2 : 2 heures
- Pour l'émission E5 : 4 heures
- Pour l'émission E9 : 1 heure

Dans le cas présent, si le serveur doit opérer une sélection en privilégiant cette stratégie, il téléchargera en priorité E9 dont l'extremum intervient au cours de la première tranche, puis E2 (seconde tranche), puis E1 (troisième tranche) et enfin E5 (quatrième tranche). Cette stratégie permet de minimiser les pertes de revenus suite à des propositions insatisfaites.

Un perfectionnement de la présente invention consiste en ce que l'utilisateur envoie une proposition incomplète, dans laquelle manque un paramètre. Il envoie par exemple un prix sans émettre de délai ou l'inverse. Le serveur reçoit sa proposition, et compte tenu de la planification des téléchargements, propose en retour une valeur du paramètre manquant qui permet de satisfaire l'utilisateur. Par exemple, l'utilisateur envoie une proposition en indiquant une émission et un prix mais sans indiquer de délai. Après l'étape d'analyse, le serveur répond en indiquant le délai prévu compte tenu des paramètres calculés à l'issue de l'étape d'analyse. Si de nombreuses propositions ont été reçues et validées, le délai sera court car le téléchargement rapide d'une telle émission est rentable. Par contre, si peu de propositions sont arrivées, le délai est long, ou le serveur répond qu'actuellement il n'est pas en mesure de programmer un téléchargement pour cette émission.

Si plusieurs serveurs proposent des catalogues différents, certains éléments des catalogues peuvent être identiques. Un autre perfectionnement de la présente invention consiste en ce que le chargeur lance la même proposition à plusieurs serveurs et à l'issue des différents échanges, transmette à l'utilisateur la meilleure offre, en indiquant quel serveur pourrait télécharger l'émission.

## Revendications

1. Procédé de transmission d'émissions audiovisuelles émises à partir d'un serveur à destination d'au moins un terminal comportant une première étape de visualisation d'un catalogue d'émissions audiovisuelles téléchargeables au niveau du terminal, **caractérisé en ce qu'**il comporte les étapes chronologiques suivantes :
au niveau du terminal:
- une étape de sélection d'au moins une émission audiovisuelle;
- une étape d'élaboration d'une proposition conditionnant la réception de l'émission sélectionnée:
- une étape de transmission (3.1) de la proposition vers le serveur, proposition comprenant au moins un des paramètres suivants : délai, prix;
et au niveau du serveur:
- une étape d'analyse des propositions émises par les terminaux, et de détermination d'une décision de transmettre l'émission compte tenu des paramètres ;
si la décision de transmettre l'émission est prise :
- une étape de transmission de l'émission sélectionnée sur un réseau de diffusion,
- une étape d'émission (3.2) d'un code permettant à chaque terminal ayant transmis une proposition de visualiser l'émission reçue, la visualisation intervenant après paiement d'un prix minimum et/ou au plus tard à la fin du délai déterminé.

2. Procédé de transmission d'émissions selon la revendication 1, **caractérisé en ce qu'**au niveau du serveur, l'étape d'analyse est activée après un temps déterminé à partir du moment où l'émission est mise dans le catalogue.

3. Procédé de transmission d'émissions selon la revendication 1 ou 2, **caractérisé en ce qu'**au niveau du serveur, l'étape d'analyse est activée après qu'un nombre déterminé de propositions est reçu.

4. Procédé de transmission d'émissions selon l'une quelconque des revendications 1 à 3, **caractérisé en ce qu'**il comporte en outre une étape d'émission (3.2) par le serveur vers au moins un terminal d'une notification indiquant que le serveur a décidé de ne pas transmettre l'émission.

5. Procédé de transmission d'émissions selon la revendication 4, **caractérisé en ce que** ladite notification comprend une indication de la raison du refus pour le serveur de ne pas transmettre rémission.

6. Procédé de transmission d'émissions selon la revendication 4 ou 5, **caractérisé en ce que** ladite notification comprend une valeur de paramètre tel que le prix ou le délai qui, incorporée dans une proposition, permettrait à l'utilisateur de visualiser l'émission.

7. Procédé de transmission d'émissions selon l'une quelconque des revendications précédentes, **caractérisé en ce que** la proposition émise par le terminal comporte une indication déterminant un sous-ensemble d'émissions du catalogue, et **en ce qu'**au cours de l'étape d'analyse et de détermination, le serveur sélectionne dans le sous-ensemble une émission du catalogue dont la transmission vers les terminaux respecte des critères propres au serveur.

8. Procédé de transmission d'émissions selon l'une quelconque des revendications précédentes, **caractérisé en ce que** la décision de transmettre une émission est prise de préférence lorsque de nombreux utilisateurs ont proposé cette émission.

9. Procédé de transmission d'émissions selon l'une quelconque des revendications précédentes, **caractérisé en ce qu'**il comporte une étape d'enregistrement de rémission au sein du terminal.

10. Terminal audiovisuel comprenant une unité centrale (3), un moyen de réception d'émissions audiovisuelles provenant d'un réseau de diffusion (4), un moyen de communication bidirectionnel (5) avec un second réseau (6), un moyen d'affichage (2) d'un catalogue d'émissions disponibles et un moyen de sélection d'une émission audiovisuelle (7,8), **caractérisé en ce qu'**il comprend en outre un moyen d'élaboration (8) d'au moins un paramètre tel que prix et/ou délai, associé au téléchargement d'au moins une émission sélectionnée, un premier moyen pour émettre vers le second réseau (6) une proposition comportant au moins un identifiant d'émission et le paramètre introduit, et un moyen pour recevoir une décision concernant la proposition pour télécharger l'émission du réseau de diffusion selon le paramètre précédemment élaboré.

11. Terminal audiovisuel selon la revendication 10, **caractérisé en ce qu'**il comporte en outre un moyen de réception (5) d'une notification de refus de téléchargement, refus affiché sur le moyen d'affichage (2).

12. Terminal audiovisuel selon la revendication 11, **caractérisé en ce qu'**il comporte en outre un moyen de réception (5) d'un second paramètre tel que prix ou délai incorporé dans la notification de refus de téléchargement, le second paramètre est affiché sur le moyen d'affichage (2).

13. Terminal audiovisuel selon la revendication 10, **caractérisé en ce qu'**un seul des paramètres tel que prix ou délai est incorporé dans la proposition, l'accord de téléchargement reçu du réseau (6) est accompagné d'une valeur de l'autre paramètre, délai ou prix, et **en ce qu'**il comporte un second moyen d'émission (5) sur le réseau d'une seconde proposition comportant les deux paramètres.

14. Terminal audiovisuel selon l'une quelconque des revendications 10 à 13, **caractérisé en ce que** la proposition comporte un identifiant (THEME) d'un sous-ensemble d'émissions présentées au catalogue, et **en ce qu'**il comporte un moyen de réception (5) d'un identifiant d'émission susceptible d'être reçue selon les paramètres définis dans la proposition.

15. Terminal audiovisuel selon l'une quelconque des revendications 10 à 14, **caractérisé en ce qu'**il comporte un moyen de réception (5) d'une référence de canal et de réseau (6) pour recevoir l'émission sélectionnée.

16. Terminal audiovisuel selon l'une quelconque des revendications 10 à 15, **caractérisé en ce qu'**il comporte un moyen de stockage (9) des émissions reçus.

17. Serveur comportant une base de données (2.3) contenant des émissions audiovisuelles, le serveur étant doté d'une interface de communication pour établir une liaison (6) avec une pluralité de terminaux, **caractérisé en ce qu'**il comporte un moyen de réception (2.4) de propositions pour transmettre au moins une émission contenue dans la base, les dites propositions provenant d'au moins un terminal comprenant au moins un paramètre tel qu'un prix ou un délai relatif à la transmission de l'émission du serveur vers le terminal, un moyen d'analyse (22, 2.1) des propositions reçues, un moyen de détermination d'une décision de transmettre l'émission compte tenu des paramètres transmis sur un réseau de diffusion, et un moyen d'émission vers le terminal d'un code permettant de visualiser au moins une émission sélectionnée.

18. Serveur selon la revendication 17, **caractérisé en ce que** le moyen d'analyse et de détermination est activé après un temps déterminé à partir du moment où l'émission est accessible aux utilisateurs des terminaux.

19. Serveur selon la revendication 17, **caractérisé en ce que** le moyen d'analyse et de détermination est activé après la réception d'un nombre déterminé de propositions émanant des terminaux.

20. Serveur selon l'une quelconque des revendications 17 à 19, **caractérisé en ce qu'**une proposition reçue d'un terminal ne comporte qu'un seul des paramètres pris dans l'ensemble: prix, délai; et **en ce que** l'acceptation émise vers ce terminal comporte une valeur de l'autre paramètre de l'ensemble.

21. Serveur selon l'une quelconque des revendications 17 à 20, **caractérisé en ce qu'**une proposition reçue d'un terminal ne comporte qu'une indication déterminant un sous-ensemble d'émissions, la moyen d'analyse et de détermination comporte en outre un moyen de détermination d'une émission appartenant à ce sousensemble, pour laquelle les paramètres émis dans la proposition permettent une transmission à ce terminal.

22. Serveur selon l'une quelconque des revendications 17 à 21, **caractérisé en ce qu'**il comporte un moyen de détermination du moyen de transmission de l'émission, la notification de l'acceptation de la transmission vers les terminaux comprenant un identifiant du moyen de transmission.

## Claims

1. A method of transmitting audiovisual programmes from a server to at least one terminal comprising a first step of viewing a catalogue of downloadable audiovisual programmes on the terminal, **characterized in that** it comprises the following chronological steps:
at the terminal:
- a step of selecting at least one audiovisual programme;
- a step of generating a proposition conditioning the reception of the selected programme;
- a step of transmitting (3.1) the proposition to the server, the proposition comprising at least one of the following parameters: deadline, price;
and at the server:
- a step of analysing the propositions sent by the terminals and of determining a decision to transmit the transmission taking account of the parameters;
if the decision to transmit the programme is taken:
- a step of transmitting the selected programme through a broadcast network,
- a step of transmitting (3.2) a code enabling each terminal that has sent a proposition to view the received programme, viewing occurring after payment of a minimum price and/or not later than expiry of the determined deadline.

2. The method of receiving programmes as claimed in claim 1, **characterized in that** at the server, the analysis step is activated after a determined time from the moment when the programme is placed in the catalogue.

3. The method of receiving programmes as claimed in claim 1 or 2, **characterized in that** at the server, the analysis step is activated after a determined number of propositions is received.

4. The method of receiving programmes as claimed in any of claims 1 to 3, **characterized in that** it also comprises a step (3.2) of transmission by the server to at least one terminal of a notification indicating that the server has decided not to transmit the programme.

5. The method of receiving programmes as claimed in claim 4, **characterized in that** the said notification comprises an indication of the reason for the server's refusal to transmit the programme.

6. The method of receiving programmes as claimed in claim 4 or 5, **characterized in that** the said notification comprises a parameter value such as the price or deadline which, incorporated in a proposition, would enable the user to view the programme.

7. The method of receiving programmes as claimed in any of the above claims, **characterized in that** the proposition sent by the terminal comprises an indication determining a subset of programmes in the catalogue and **in that**, in the course of the analysis and determination step, the server selects from the subset a programme from the catalogue the transmission of which to the terminals satisfies the server's own criteria.

8. The method of receiving programmes as claimed in any of the above claims, **characterized in that** the decision to transmit a programme is taken preferably when many users have proposed that programme.

9. The method of receiving programmes as claimed in any of the above claims, **characterized in that** it comprises a step of recording the programme within the terminal.

10. An audiovisual terminal comprising a central processor unit (3), a means of receiving audiovisual programmes from a broadcast network (4), a means of two-way communication (5) with a second network (6), a means of displaying (2) a catalogue of available programmes and a means of selecting an audiovisual programme (7,8), **characterized in that** it also comprises a means of generating (8) at least one parameter such as the price and/or deadline, associated with the downloading of at least one selected programme, a first means for transmitting to the network a proposition comprising at least one programme identifier and the parameter entered, and a means of receiving a decision concerning the proposition to download the programme according to the previously generated parameter.

11. The audiovisual terminal as claimed in claim 10, **characterized in that** it also comprises a means of receiving (5) a notification of refusal to download, the refusal being displayed on the display means (2).

12. The audiovisual terminal as claimed in claim 11, **characterized in that** it also comprises a means of receiving (5) a second parameter such as the price or deadline incorporated in the notification of refusal to download, the second parameter being displayed on the display means (2).

13. The audiovisual terminal as claimed in claim 10, **characterized in that** only one of the parameters such as price or deadline is incorporated in the proposition, the agreement to download received from the network (6) is accompanied by a value of the other parameter : deadline or price, and **in that** it comprises a second means of transmission (5) over the network of a second proposition comprising the two parameters.

14. The audiovisual terminal as claimed in any of claims 10 to 13, **characterized in that** the proposition comprises an identifier (TOPIC) of a subset of programmes presented in the catalogue, and **in that** it comprises a means of receiving (5) an identifier of a programme likely to be received according to the parameters defined in the proposition.

15. The audiovisual terminal as claimed in any of claims 10 to 14, **characterized in that** it comprises a means of receiving (5) a channel and network reference (6) to receive the selected programme.

16. The audiovisual terminal as claimed in any of claims 10 to 15, **characterized in that** it comprises a means of storing (9) the programmes received.

17. A server comprising a database (2.3) containing audiovisual programmes, the server having a communication interface for establishing a link (6) with a plurality of terminals, **characterized in that** it comprises a means of receiving (2.4) propositions to transmit at least one programme contained in the database, the said propositions coming from at least one terminal comprising at least one parameter such as a price or a deadline relating to the transmission of the programme from the server to the terminal, a means of analysis (2.2, 2.1) of the propositions received, a means of determining a decision to transmit the programme taking account of the parameters transmitted; and a means of transmitting to the terminal a code for viewing at least one selected programme.

18. The server as claimed in claim 17, **characterized in that** the means of analysis and determination is activated after a determined time from the moment when the programme is accessible to the users of the terminals.

19. The server as claimed in claim 17, **characterized in that** the means of analysis and determination is activated after receipt of a determined number of propositions from the terminals.

20. The server as claimed in any of claims 17 to 19, **characterized in that** a proposition received from a terminal comprises only one of the parameters from the set: price, deadline; and **in that** the acceptance sent to that terminal comprises a value of the other parameter in the set.

21. The server as claimed in any of claims 17 to 20, **characterized in that** a proposition received from a terminal comprises only one indication determining a subset of programmes, the means of analysis and determination also comprises a means of determining a programme belonging to that subset, for which the parameters sent in the proposition enable a transmission to that terminal.

22. The server as claimed in any of claims 17 to 21, **characterized in that** it comprises a means of determining the means of transmission of the programme, the notification of acceptance of the transmission to the terminals comprising an identifier of the means of transmission.

## Patentansprüche

1. Verfahren zur Übertragung von audiovisuellen Programmen von einem Server für wenigstens ein Terminal mit einem ersten Schritt der Wiedergabe eines Katalogs der bei dem Terminal herunterladbaren, audiovisuellen Programme, **gekennzeichnet durch** folgende chronologische Schritte:
bei dem Terminal:
- ein Schritt zur Wahl wenigstens eines audiovisuellen Programms,
- ein Schritt zur Gewinnung eines Vorschlags für den Empfang des gewählten Programms,
- ein Schritt zur Übertragung (3.1) des Vorschlags zu dem Server, wobei der Vorschlag wenigstens einen der folgenden Parameter enthält: Verzögerung, Preis,
und beim Server:
- ein Schritt zur Analyse der **durch** die Terminals gesendeten Vorschläge und Bildung einer Entscheidung, das Programm unter Berücksichtigung der Parameter zu übertragen,
wenn die Entscheidung für die Übertragung des Programms gefallen ist:
- ein Schritt zur Übertragung des gewählten Programms über ein Sendenetz,
- ein Schritt zur Sendung (3.2) eines Codes, der ermöglicht, dass jedes Terminal, das einen Vorschlag zur Betrachtung des empfangenen Programms gesendet hat, die Betrachtung nach der Zahlung eines Minimalpreises und/oder später am Ende der bestimmten Verzögerung ermöglicht.

2. Verfahren zur Übertragung von Programmen nach Anspruch 1, **dadurch gekennzeichnet, dass** beim Server der Schritt der Analyse nach einer bestimmten Zeit von dem Zeitpunkt erfolgt, wo das Programm in den Katalog eingegeben wurde.

3. Verfahren zur Übertragung von Programmen nach Anspruch 1 oder 2, **dadurch gekennzeichnet, dass** beim Server der Schritt der Analyse aktiv ist, nachdem eine bestimmte Zahl von Vorschlägen empfangen worden ist.

4. Verfahren zur Übertragung von Programmen nach einem der Ansprüche 1 bis 3, **gekennzeichnet durch** einen weiteren Schritt der Sendung (3.2) **durch** den Server zu wenigstens einem Unterterminal einer Nachricht, die anzeigt, dass der Server entschieden hat, das Programm nicht zu übertragen.

5. Verfahren zur Übertragung von Programmen nach Anspruch 4, **dadurch gekennzeichnet, dass** die Benachrichtigung eine Anzeige des Grundes der Zurückweisung durch den Server, das Programm nicht zu übertragen, enthält.

6. Verfahren zur Übertragung von Programmen nach Anspruch 4 oder 5, **dadurch gekennzeichnet, dass** die Benachrichtigung einen Parameterwert enthält, wie den Preis oder die Verzögerung, in einem Vorschlag, der dem Benutzer die Wiedergabe des Programms ermöglicht.

7. Verfahren zur Übertragung von Programmen nach einem der vorangehenden Ansprüche, **dadurch gekennzeichnet, dass** der durch das Terminal gesendete Vorschlag eine Anzeige enthält, die einen Untersatz von Programmen des Katalogs bestimmt, und dass im Verlauf des Schritts der Analyse und der Ermittlung der Server in dem Untersatz eine Sendung des Kataloges wählt, dessen Übertragung zu den Terminals Kriterien für den Server berücksichtigt.

8. Verfahren zur Übertragung von Programmen nach einem der vorangehenden Ansprüche, **dadurch gekennzeichnet, dass** die Entscheidung, ein Programm zu übertragen, vorzugsweise erfolgt, wenn zahlreiche Anwender dieses Programm vorgeschlagen haben.

9. Verfahren zur Übertragung von Programmen nach einem der vorangehenden Ansprüche, **gekennzeichnet durch** einen Schritt zur Aufzeichnung des Programms in dem Terminal.

10. Audiovisuelles Terminal mit einer Zentraleinheit (3), Mitteln zum Empfang von audiovisuellen Programmen von einem Sendenetz (4), Mitteln zur bidirektionalen Kommunikation (5) mit einem zweiten Netz (6), Mitteln zur Wiedergabe (2) eines Katalogs der verfügbaren Programme und Mitteln zur Wahl eines audiovisuellen Programms (7, 8), **gekennzeichnet durch** Mittel zur Bildung (8) wenigstens eines Parameters wie den Preis und/oder die Verzögerung, für die Femladung wenigstens eines gewählten Programms, ersten Mitteln zur Sendung zu dem zweiten Netz (6) eines Vorschlags, der wenigstens eine Programmanzeige und den eingefügten Parameter enthält, und Mitteln zum Empfang einer Entscheidung für den Vorschlag für die Fernladung des Programms des Sendenetzes entsprechend den vorbestimmten Parametern.

11. Audiovisuelles Terminal nach Anspruch 10, **gekennzeichnet durch** Mittel zum Empfang (5) einer Benachrichtigung zur Zurückweisung der Fernladung, wobei die Zurückweisung auf den Wiedergabemitteln (2) angezeigt wird.

12. Audiovisuelles Terminal nach Anspruch 11, **gekennzeichnet durch** weitere Mittel zum Empfang (5) eines zweiten Parameters, wie den Preis oder die Verzögerung in der Benachrichtigung der Zurückweisung der Fernladung, der zweite Parameter auf den Wiedergabemitteln (2) angezeigt wird.

13. Audiovisuelles Terminal nach Anspruch 10, **dadurch gekennzeichnet, dass** ein einziger der Parameter wie der Preis oder die Verzögerung in dem Vorschlag enthalten ist, dass die Abstimmung der durch das Netz (6) empfangenen Fernladung begleitet ist von einem Wert des anderen Parameters, Verzögerung oder Preis, und zweite Programmmittel (5) auf dem Netz eines zweiten Vorschlags, der die beiden Parameter enthält.

14. Audiovisuelles Terminal nach einem der Ansprüche 10 bis 13, **dadurch gekennzeichnet, dass** der Vorschlag ein Kennzeichen (THEMA) eines Untersatzes von in dem Katalog gezeigten Programmen enthält und dass er Mittel enthält zum Empfang (5) eines Kennzeichens des Programms, das entsprechend den in dem Vorschlag definierten Parametern empfangen wird.

15. Audiovisuelles Terminal nach einem der Ansprüche 10 bis 14, **gekennzeichnet durch** Mittel zum Empfang (5) einer Referenz des Kanals und des Netzes (6) für den Empfang des gewählten Programms.

16. Audiovisuelles Terminal nach einem der Ansprüche 10 bis 15, **gekennzeichnet durch** Mittel zur Speicherung (9) der empfangenen Programme.

17. Server mit einer Datenbank (2.3), die audiovisuelle Programme enthält, wobei der Server versehen ist mit einer Schnittstelle zur Kommunikation zur Bildung einer Verbindung (6) mit mehreren Terminals, **gekennzeichnet durch** Mittel zum Empfang (2.4) von Vorschlägen für die Übertragung wenigstens eines in der Datenbank enthaltenden Programms, wobei die Vorschläge wenigstens von einem Terminal kommen, das wenigstens einen Parameter enthält, wie einen Preis oder eine Verzögerung, für die Übertragung des Programms des Servers zu Analysemitteln (2.2, 2.1) der empfangenen Vorschläge, Mittel zur Bestimmung einer Entscheidung zur Übertragung des Programms unter Berücksichtigung der auf dem zweiten Netz übertragenen Parameter, und Mittel zur Sendung zu dem Terminal eines Codes, der die Wiedergabe wenigstens eines gewählten Programms ermöglicht.

18. Server nach Anspruch 17, **dadurch gekennzeichnet, dass** die Mittel zur Analyse und der Bestimmung eine bestimmte Zeit nach dem Zeitpunkt aktiv sind, wo die Benutzer der Terminals Zugriff haben.

19. Server nach Anspruch 17, **dadurch gekennzeichnet, dass** die Mittel zur Analyse und zur Bestimmung nach dem Empfang einer bestimmten Zahl von Vorschlägen von den Terminals aktiv sind.

20. Server nach einem der Ansprüche 17 bis 19, **dadurch gekennzeichnet, dass** ein von dem Terminal empfangener Vorschlag nur die Parameter in dem Satz enthält: Preis, Verzögerung, und dass die zu dem Terminal gesendete Entgegennahme einen Wert des anderen Parameters des Satzes enthält.

21. Server nach einem der Ansprüche 17 bis 20, **dadurch gekennzeichnet, dass** ein von dem Terminal empfangener Vorschlag nur eine Anzeige enthält, die einen Untersatz von Programmen bestimmt, dass die Mittel zur Analyse und zu der Bestimmung außerdem ein Mittel enthalten zur Bestimmung eines Programms von dem Untersatz, für den die durch den Vorschlag gesendeten Parameter eine Übertragung zu diesem Terminal ermöglichen.

22. Server nach einem der Ansprüche 17 bis 21, **gekennzeichnet durch** Mittel zur Bestimmung der Mittel zur Übertragung des Programms, wobei die Benachrichtigung der Annahme der Übertragungen über die Terminals Kennzeichen für die Übertragungsmittel enthält.
